# FASCICULE DE BREVET EUROPEEN

(11) **EP 1 038 714 B1**
(45) Date de publication et mention de la délivrance du brevet: **04.05.2005**
(21) Numéro de dépôt: 00400577.3
(22) Date de dépôt: 03.03.2000
(51) Int. Cl.: B60K 15/04

(54) **Raccordement entre deux éléments cylinderiques**
Verbindung zwischen zwei zylindrischen Elementen
Connection between two cylindrical elements

(30) Priorité: 26.03.1999 FR 9903793
(43) Date de publication de la demande: 27.09.2000
(73) Titulaire: Renault s.a.s., 92100 Boulogne Billancourt (FR)
(72) Inventeur: Dorneau, Jean-Marc, 78330 Fontenay le Fleury (FR)

(56) Documents cités:
- AT-B- 110 743
- DE-A- 19 547 177
- DE-C- 615 055
- US-A- 4 224 167
- US-A- 4 718 568
- US-A- 5 443 098

## Description

La présente invention concerne un raccordement entre deux éléments cylindriques.

La présente invention s'applique plus particulièrement à un raccordement entre deux embouts cylindriques appartenant respectivement à un réservoir et à un conduit aboutissant audit réservoir.

De manière générale, on connaît trois types de raccordement entre des embouts cylindriques appartenant à un réservoir et à un conduit aboutissant à ce réservoir. Le premier raccordement est de type indémontable. Le conduit aboutissant au réservoir est alors soudé sur ce dernier. Cette liaison est représentée dans la publication US-4224167.

Ce type de raccordement, par soudure, a l'avantage d'être particulièrement économique au montage. Cependant, il pose des problèmes de coûts en après-vente, notamment lorsqu'un des deux éléments seulement, le réservoir ou le conduit, est endommagé. En effet, les deux éléments étant inséparables, il faut dans ce cas procéder au remplacement de l'ensemble alors qu'une seule partie est défectueuse.

Le deuxième type de raccordement est démontable. La publication US-4718568 décrit un raccordement par manchon entre l'embout cylindrique du réservoir et l'embout cylindrique du conduit aboutissant audit réservoir.

La publication AT-B-110743 concerne un troisième type de raccordement dans lequel deux éléments cylindriques munis de bourrelets sont soudés entre eux et sont en même temps maintenus par un manchon. Le préambule de la revendication 1 est basé sur ce document.

Dans ce cas, on utilise une troisième pièce, le manchon, qui relie les embouts du réservoir et du conduit qui y aboutit. L'étanchéité du raccordement est assurée par des anneaux métalliques serrant chaque extrémité du manchon sur l'embout cylindrique du réservoir et sur l'embout cylindrique du conduit, chacune de ces extrémités étant usinée de manière à garantir cette étanchéité.

Ce type de liaison, représente un coût supplémentaire dans la fabrication du véhicule en nécessitant non seulement l'utilisation d'une pièce supplémentaire, le manchon, mais aussi en augmentant le temps de montage de l'ensemble réservoir et conduit.

L'invention a pour but de remédier à ces inconvénients en proposant un raccordement entre deux embouts cylindriques qui garantit un faible coût de montage et qui facilite les opérations de réparation en après-vente, tout en minimisant le coût de ces dernières.

Dans ce but, l'invention propose un raccordement entre deux éléments cylindriques, rigidement reliés, lesdits éléments cylindriques possédant des éléments de réception destinés à coopérer avec une pièce d'étanchéité.

Selon une caractéristique de l'invention, les éléments cylindriques sont des embouts cylindriques appartenant, d'une part à un réservoir et, d'autre part à un conduit aboutissant audit réservoir.

Selon une autre caractéristique de l'invention, les éléments cylindriques sont rigidement reliés par soudure.

Selon une autre caractéristique de l'invention, les éléments de réception sont des bourrelets situés sur la circonférence des éléments cylindriques, lesdits bourrelets étant destinés à constituer, sur chaque élément cylindrique, une zone d'accroche pour la pièce d'étanchéité.

Selon une autre caractéristique de l'invention, la pièce d'étanchéité est un manchon.

L'invention propose également un procédé de réparation d'un raccordement selon les caractéristiques précitées, caractérisé en ce que, en cas d'endommagement du réservoir ou du conduit aboutissant audit réservoir,
on enlève la partie endommagée par découpe,
on relie la partie non endommagée et la nouvelle partie par la pièce d'étanchéité de sorte que ladite partie d'étanchéité vienne s'emmancher, à chacune de ses extrémités, sur un embout cylindrique, et coopère avec les éléments de réception portés par lesdits embouts cylindriques.

D'autres avantages et caractéristiques de l'invention seront mis en évidence dans la description suivante, donnée à titre d'exemple, en référence aux dessins annexés parmi lesquels :
- la figure 1 représente un raccordement entre un réservoir et un conduit de remplissage aboutissant audit réservoir, selon un exemple de réalisation conforme à l'invention.
- la figure 2 représente ce même raccordement après une intervention de réparation.

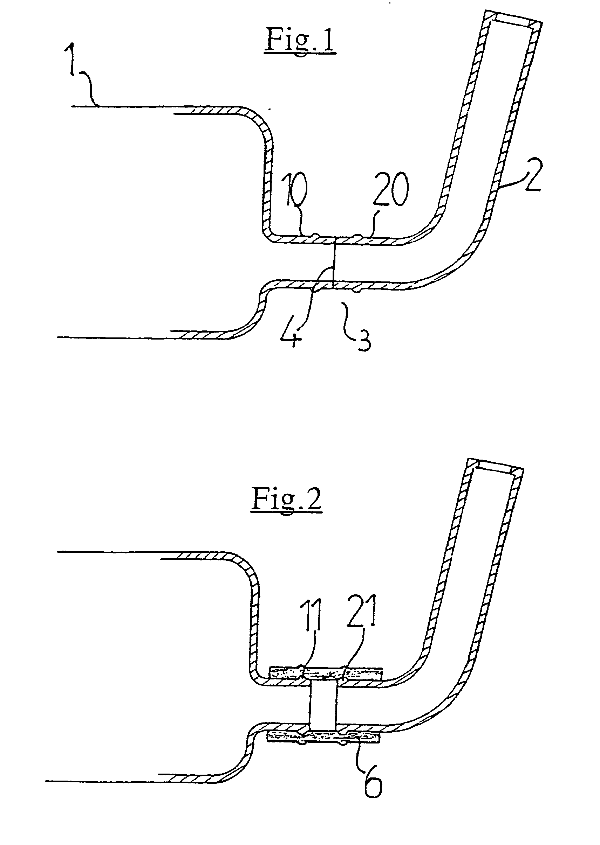

Comme représenté à la figure 1, un réservoir 1 est relié à un conduit de remplissage 2 par l'intermédiaire d'un raccordement 3.

Le raccordement 3 se compose, dans l'exemple de réalisation représenté, de deux embouts cylindriques 20 et 10 de même diamètre. Le premier embout cylindrique 20 prolonge l'extrémité inférieure du conduit de remplissage 2. Cet embout cylindrique 20 est destiné à relier le conduit de remplissage 2 et le réservoir 1, par l'intermédiaire du second embout cylindrique 10. Ce second embout cylindrique 10 se situe en partie basse du réservoir 1.

Le premier embout cylindrique 20 et le second embout cylindrique 10 sont reliés, selon l'exemple de réalisation représenté, par une soudure 4. Chacun de ces embouts cylindriques 20 et 10 porte, sensiblement à proximité de la soudure 4 et sur toute sa circonférence, respectivement un bourrelet 21 et un bourrelet 11.

De cette manière, le raccordement entre l'embout cylindrique 20 du conduit de remplissage 2 et l'embout cylindrique 10 du réservoir 1, par soudage, est particulièrement économique. Dans un autre exemple de réalisation, les deux embouts cylindriques peuvent être rigidement liés par collage.

De plus, la présence des bourrelets 21 et 11 rend cette solution très intéressante lors d'interventions après-vente. En effet, tel que représenté figure 2, lorsqu'une intervention après-vente nécessite le remplacement du conduit de remplissage 2 ou du réservoir 1, seul celui de ces éléments qui est défectueux pourra être échangé.

Ainsi, la présence du bourrelet 11 et du bourrelet 21 va permettre une réparation rapide. En effet, pour réparer le raccordement de deux embouts cylindriques conforme à l'invention, il suffit, dans un premier temps, de réaliser au moins une coupure, afin de se séparer du conduit de remplissage 2 ou du réservoir 1 défectueux, ainsi que de la soudure 4.

Comme représenté à la figure 2, dans le cas où le conduit de remplissage est défectueux, celui-ci ainsi que la soudure 4 seront éliminés.

Dans un second temps, un nouveau conduit de remplissage 2, possédant également un embout cylindrique 20 muni d'un bourrelet 21, sera relié à l'embout cylindrique 10 par l'intermédiaire d'un manchon de liaison 6. Le manchon de liaison 6 est emmanché, à une extrémité, sur l'embout cylindrique 10 du réservoir 1 et, à l'autre extrémité, sur l'embout cylindrique 20 du nouveau conduit de remplissage 2.

Les bourrelets 11 et 21, respectivement des embouts cylindriques 10 et 20, en constituant une zone "d'accroche", permettent un raccordement étanche, par le manchon 6, entre le conduit de remplissage 2 et le réservoir 1.

Dans certains cas, selon les matériaux constitutifs du raccordement 3, une zone d'étanchéité sera réusinée sur l'embout cylindrique 10 et/ou sur l'embout cylindrique 20, sensiblement à proximité des bourrelets 11 et/ou 21, afin d'optimiser l'adhérence du manchon de liaison 6 et donc l'étanchéité du raccordement.

Le raccordement conforme à l'invention, entre un embout cylindrique d'un réservoir et un embout cylindrique d'un conduit aboutissant audit réservoir, a donc l'avantage d'être particulièrement économique au montage et facilement réparable lors d'interventions après-vente. Il diminue également les dépenses, en cas de réparations, en permettant de ne changer que l'élément endommagé du réservoir ou du conduit.

Enfin, le raccordement entre deux éléments cylindriques ne se limite pas à l'exemple de réalisation représenté, mais englobe tout raccordement entre deux éléments cylindriques possédant des éléments de réception destinés à coopérer avec une pièce d'étanchéité.

## Revendications

1. Procédé de réparation, en cas d'endommagement, d'un raccord entre deux embouts cylindriques (10,20) initialement reliés rigidement et appartenant d'une part à un réservoir (1) et d'autre part à un conduit (2) aboutissant audit réservoir (1), chaqu'un des embouts cylindriques (10, 20) comportant à proximité de la liaison rigide sur sa circonférence un bourrelet (11, 21) **caractérisé en ce qu'**on enlève la partie endommagée (10,20,4,1,2) par découpe entre les deux bourrelets (11,21), et **en ce qu'**on relie la partie non endommagée et la nouvelle partie par une pièce d'étanchéité (6) de sorte que ladite pièce d'étanchéité (6) vienne s'emmancher, à chacune de ses extrémités, sur les embouts cylindriques (10,20) et coopère, après séparation des embouts (10,20), avec les bourrelets (11,21) formant alors éléments de réception.

2. Procédé de réparation selon la revendication 1, **caractérisé en ce que** les éléments cylindriques (10,20) sont initialement reliés rigidement par soudure.

3. Procédé de réparation selon l'une quelconque des revendications précédentes, **caractérisé en ce que** la pièce d'étanchéité (6) est un manchon.

## Patentansprüche

1. Verfahren zur Reparatur, im Falle einer Beschädigung, einer Verbindung zwischen zwei zylindrischen Ansatzstücken (10, 20), welche anfänglich starr verbunden sind und einerseits einem Behälter (1) und andererseits einer Leitung (2), welche zu dem Behälter (1) hinführt, angehören, wobei jedes der zylindrischen Ansatzstücke (10, 20) in der Nähe der festen Verbindung auf ihrem Umfang eine Wulst (11, 21) aufweist, **dadurch gekennzeichnet, dass** man den schadhaften Teil (10, 20, 4, 1, 2) durch Schneiden zwischen den beiden Wülsten (11, 21) entfernt, und dadurch, dass man den nicht-beschädigten Teil und den neuen Teil durch ein Dichtigkeitsstück (6) nach der Art verbindet, dass das Dichtigkeitsstück (6) sich, an jedem seiner Enden, auf die zylindrischen Ansatzstücke (10, 20) aufpresst und, nach der Trennung der Ansatzstücke (10, 20), mit den Wülsten (11, 21) zusammenwirkt, welche so Aufnahmeelemente bilden.

2. Reparaturverfahren nach Anspruch 1, **dadurch gekennzeichnet, dass** die zylindrischen Elemente (10, 20) avfänglich durch Schweißen oder Löten fest verbunden sind.

3. Reparaturverfahren nach einem der vorhergehenden Ansprüche, **dadurch gekennzeichnet, dass** das Dichtigkeitsstück (6) eine Muffe ist.

## Claims

1. A method of repair, in the event of damage, of a connection between two cylindrical endpieces (10, 20) initially rigidly connected and belonging, on one hand, to a tank (1) and, on the other hand, to a duct (2) leading to this tank (1), each of the cylindrical endpieces (10, 20) comprising a reception member (11, 21) about its circumference in the vicinity of the rigid connection, **characterised in that** the damaged portion (10, 20, 4, 1, 2) is removed by cutting between the two reception members (11, 21), and **in that** the undamaged portion and the new part are connected by a sealing member (6) in such a way that each end of this sealing member (6) is fitted on the cylindrical endpieces (10, 20) and cooperates, after separation of the endpieces (10, 20), with the reception members (11, 21) then forming actual reception members. '

2. A method of repair as claimed in claim 1, **characterised in that** the cylindrical members (10, 20) are initially rigidly connected by welding.

3. A method of repair as claimed in any one of the preceding claims, **characterised in that** the sealing member (6) is a sleeve.
